(19) Europäisches Patentamt / European Patent Office / Office européen des brevets

(11) **EP 2 545 985 A1**

(12) **EUROPEAN PATENT APPLICATION**

(43) Date of publication:
**16.01.2013 Bulletin 2013/03**

(21) Application number: **11174236.7**

(22) Date of filing: **15.07.2011**

(51) Int Cl.:
*B01D 69/12* (2006.01)    *B01D 71/34* (2006.01)
*B01D 71/42* (2006.01)    *B01D 71/68* (2006.01)
*B01D 67/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Gambro Lundia AB**
**220 10 Lund (SE)**

(72) Inventors:
• **Hornung, Markus**
**72147 Nehren (DE)**
• **Krause, Bernd**
**72414 Rangendingen (DE)**
• **Trzaskus, Krzysztof**
**48163 Münster (DE)**

(74) Representative: **Perchenek, Nils**
**Gambro Dialysatoren GmbH**
**Legal and Intellectual Property**
**Holger Crafoord-Strasse 26**
**72379 Hechingen (DE)**

(54) **Composite membrane**

(57)    The present disclosure relates to a method for the production of a composite membrane comprising a porous membrane modified with a membrane-forming hydrophilic polymer. The composite membrane can be used for removing virus particles from liquids.

Fig.3

## Description

Technical Field

The invention relates to a method for the production of a composite membrane comprising a porous membrane modified with a membrane-forming hydrophilic polymer. The composite membrane can be used for removing virus particles from liquids.

Background of the Invention

Virus removal by filtration techniques is known in the art. State-of-the-art virus removal filters in the biotech industry are manufactured from either (i) cellulose or (ii) synthetic polymers (PES, PSU, PVDF).

The advantage of the commercially available filters based on synthetic polymers is the high flux achievable, but they generally show unsatisfactory rejection behavior for virus particles (expressed as LRV). The commercially available cellulose-based filters show excellent rejection of parvovirus and high passage of monoclonal antibodies (mAb) at high feed concentrations, however, the flux that can be achieved with these filters is limited.

It would be desirable to provide a virus filter membrane which shows both excellent rejection of parvovirus and high passage of mAb at high feed concentrations and at the same time allows for high feed flux.

US 5,084,173 discloses a method for the production of a plasma separation membrane comprising applying a solution of a water-insoluble hydrophilic copolymer, for example, an ethylene-vinyl alcohol copolymer, in an organic solvent or a mixture of an organic solvent and water onto an oriented polyolefin membranous matrix and subsequent drying to remove the solvent. The copolymer forms a coat covering substantially the overall surface of the matrix.

## Summary of the Invention

The present disclosure provides a composite membrane which can be used for virus removal from liquids. The membrane shows (i) high rejection for gold nano-particles (having 20 nm diameter and simulating parvovirus), (ii) high passage of Mab feed solution (sieving coefficient for IgG $\approx$ 1), (iii) high feed flux (which results in a high feed capacity for this type of membrane), and (iv) low protein adsorption and low fouling, which ensures a stable high filtration rate over time. The present disclosure also provides methods for production of the composite membrane and devices comprising the composite membrane.

## Brief description of the Drawings

Fig. 1    shows SEM pictures of the cross section, the center of the cross section, the inner surface and the outer surface of an unmodified porous membrane suitable for use in the process of the invention;

Fig. 2    shows SEM picture of the cross section, the center of the cross section, the inner surface and the outer surface of a composite membrane produced by the process of the invention;

Fig. 3    shows SEM pictures of the cross section, the center of the cross section, the inner surface and the outer surface of another composite membrane produced by the process of the invention.

## Detailed Description of the Invention

The process for preparing a composite porous membrane according to the invention comprises modifying a porous membrane with a membrane-forming hydrophilic polymer selected from the group consisting of cellulose, cellulose derivatives, and poly(vinyl alcohol-co-ethylene).

The porous membrane can have any suitable geometry according to the needs of the intended use, e.g. it can take the form of a flat sheet, a hollow fiber, or be shaped to form chambers or other geometries needed.

In a specific embodiment of the present invention, the porous membrane is a hollow fiber membrane. A hollow fiber membrane of the invention is further characterized by having an inner diameter of from 50 to 2,000 $\mu$m, preferably of from 50 to 1,000 $\mu$m, and more preferably from 100 to 500 $\mu$m. The wall thickness is generally from 3% to 30% of the external diameter, i.e. generally from 5 to 200 $\mu$m, for instance from 10 to 80 $\mu$m, or even from 20 to 70 $\mu$m.

In another specific embodiment of the present invention, the porous membrane is a flat sheet membrane. The thickness of a flat sheet membrane according to the invention may vary between 10 $\mu$m and 200 $\mu$m. A thickness of 20

μm to 100 μm may be especially advantageous for most applications. Usually, several flat sheet membranes will be combined in the form of a stack to form a module for use in the present invention.

The porous membrane is comprised of synthetic polymers selected from the group consisting of polysulfones (PSf); polyethersulfones (PES); polyvinylidene fluorides (PVDF); polyacrylonitriles (PAN); and blends of the individual polymers with polyvinylpyrrolidones. In one embodiment of the invention, the porous membrane is comprised of a blend of a polyethersulfone and at least one polyvinylpyrrolidone.

The porous membrane has a homogeneous, "symmetrical type" structure, which is uniform throughout its thickness. The porous membrane is generally free of vacuoles (empty spaces included in the wall and having a largest dimension of more than about 5 microns). It does not possess a skin or a dense layer on either surface (in the case of hollow fibers, neither on the inside nor on the outside).

The membrane-forming hydrophilic polymer used to modify the porous membrane is selected from the group consisting of cellulose, cellulose derivatives, and poly(vinyl alcohol-co-ethylene).

The composite membrane of the invention shows a retention of gold nano-particles having 20 nm diameter (simulating porcine parvovirus), GPR (gold particle retention, defined as log(A/F), A/F being the ratio of the gold particle concentration in the feed and in the filtrate), of > 1.4, preferably > 1.7, more preferably > 2.0, in particular > 2.3. The GPR is proportional to the rate of retention of virus particles by the membrane. The membrane of the present invention can thus be advantageously used for the removal of virus particles from liquids.

Examples of suitable types of cellulose for preparing the composite membrane of the invention include beech sulfite pulp or cotton linters. Examples of suitable cellulose derivatives include esters like cellulose acetate; water-insoluble alkyl ethers like ethylcellulose. Suitable poly(vinyl alcohol-co-ethylene)s are insoluble in water. In one embodiment of the invention, a poly(Vinyl alcohol-co-ethylene) containing 25 to 50 mol-% of ethylene units is used to modify the porous membrane. In one embodiment of the process, the poly(vinyl alcohol-co-ethylene) has a number average molecular weight of at least 10,000 g/mol.

In one embodiment of the process, the pore space of the porous membrane is modified with the hydrophilic polymer. In another embodiment of the process, one or both surfaces of the porous membrane are modified with the hydrophilic polymer. In still another embodiment of the process, both the pore space and one or both surfaces of the porous membrane are modified with the hydrophilic polymer.

In one embodiment of the process, the modification of the porous membrane is effected by precipitating the hydrophilic polymer from solution in the presence of the porous membrane.

The solution of the hydrophilic polymer is prepared using a solvent which is able to dissolve the hydrophilic polymer but does not dissolve the porous membrane. When the porous membrane comprises polysulfone or polyethersulfone, suitable solvents include 1-propanol, 2-propanol and ionic liquids. In the case of PVDF, dimethyl sulfoxide additionally may be used. In addition to the organic solvents mentioned before, water may also be present in the solution.

In one embodiment of the process, the solvent for the hydrophilic polymer comprises an ionic liquid. Suitable ionic liquids are disclosed in WO 2003/029329 A2 and DE 10 2005 062 608 A1, both incorporated herein by reference. In one embodiment of the invention, the ionic liquids comprise cations selected from 1-ethyl-3-methylimidazolium, 1,3-dimethylimidazolium and 1-butyl-3-methylimidazolium, and anions selected from halides, perchlorate, pseudohalides, sulfate, phosphate, alkyl phosphates and $C_1$-$C_6$ carboxylates. In another embodiment of the invention, the ionic liquids are selected from the group consisting of 1-ethyl-3-methylimidazol acetate, 1-allyl-3-methylimidazol chlorate, 1-allyl-3-methylimidazol acetate, and 1-butyl-3-methylimidazol acetate. In another embodiment, the ionic liquid comprises cations selected from methyl-tri-n-butylammonium, methylimidazolium, 1-ethyl-3-methylimidazolium, 1-butyl-3-methylimidazolium, 1-ethyl-2,3-dimethylimidazolium, 1,2,3-trimethylimidazolium, 1,2,4-trimethylpyrazolium, in particular 1-ethyl-3-methylimidazolium and 1-butyl-3-methylimidazolium; and anions selected from acetate, ethylsulfate, methylsulfate, thiocyanate, hydrogensulfate, tetrachloroaluminate, and chloride, in particular acetate. In a particular embodiment, the solvent comprises 1-ethyl-3-methylimidazolium acetate (EMIM OAc).

The concentration of the hydrophilic polymer in the solution generally is in the range of from 1 to 25 wt.-%, for instance 4 to 12 wt.-%. In one embodiment, the concentration of the hydrophilic polymer in the solution is 5 to 11 wt.-%.

A commercially available solution of a hydrophilic polymer which can be used in the process is a 5 wt.-% solution of cellulose in 1-ethyl-3-methylimidazolium acetate, available from BASF Aktiengesellschaft under the trade name Cellionics™.

In one embodiment of the process, a solution of the hydrophilic polymer is provided on one side of the porous membrane, and a precipitation liquid is provided on the other side of the porous membrane. The solution of the hydrophilic polymer and the precipitation liquid are then allowed to permeate through the porous membrane by diffusion and/or convection, and the hydrophilic polymer is precipitated onto the porous membrane, forming a coat within the pore channels and/or the surfaces of the porous membrane.

In another embodiment of the process, the porous membrane is soaked with a solution of the hydrophilic polymer, excess solution is removed from the soaked membrane, and the membrane is subsequently contacted with the precipitation liquid from one side or from both sides. In an exemplary embodiment of the process involving a hollow fiber porous membrane, the lumen of the fiber is filled with a solution of the hydrophilic polymer. The fiber wall is soaked with the solution either by capillary action, or in cases where this is insufficient to completely fill the pore space of the fiber with the solution, by applying a pressure gradient between the lumen and the outside of the fiber. Excess solution is purged from the lumen of the fiber, e.g., using pressurized air. Precipitation of the hydrophilic polymer then is effected by applying the precipitation liquid to either or both sides of the membrane, i.e., by injecting precipitation liquid into the lumen of the fiber, by flushing the outside of the fiber with the precipitation liquid, by immersing the fiber into a bath containing the precipitation liquid, or by flushing the inside and the outside of the fiber with precipitation liquid.

The precipitation liquid generally is water or a combination of water and a solvent for the hydrophilic polymer. The proportion of the solvent for the hydrophilic polymer in the precipitation liquid usually is in the range of from 0 to 90 wt%, for instance, from 20 to 70 wt%, e.g., from 40 to 60 wt%. In one embodiment of the process, the precipitation bath comprises water in an amount of from 40 to 50 wt.-%, and 1-ethyl-3-methylimidazolium acetate in an amount of from 50 to 60 wt.-%.

The temperature of the precipitation liquid generally is in the range of from 0 to 50 °C. In many cases, ambient temperature will yield satisfactory results. Precipitation time can also be varied over a wide range. Normally, 5 to 30 minutes will be sufficient.

After the precipitation has been completed, the composite membrane obtained usually is washed with de-ionized water and, optionally, dried. In another embodiment of the process, the washed composite membrane is treated with a pore stabilizer, preferably glycerol or a mixture of water and glycerol, in order to stabilize the pores, and can then be stored in a non-solvent.

The hydraulic permeability of the composite membrane, measured at 37 °C, usually is in the range of from $10\cdot10^{-4}$ to $500\cdot10^{-4}$ cm$^3$/(cm$^2\cdot$bar$\cdot$sec), for instance from $15\cdot10^{-4}$ to $250\cdot10^{-4}$ cm$^3$/(cm$^2\cdot$bar$\cdot$sec).

The composite membrane has a sieving coefficient for IgG in aqueous solution of at least 0.8, e.g. at least 0.9, and in particular 1.0. The composite membrane also shows a sieving coefficient of 1.0 for albumin.

In one embodiment of the present invention, the composite membrane has a hydraulic permeability of from $10\cdot10^{-4}$ to $500\cdot10^{-4}$ cm$^3$/(cm$^2\cdot$bar$\cdot$sec), preferably of from $15\cdot10^{-4}$ to $250\cdot10^{-4}$ cm$^3$/(cm$^2\cdot$bar$\cdot$sec), a sieving coefficient for IgG of greater than 0.8 and a GPR of greater than 1.4, for instance greater than 1.7, e.g., greater than 2.0, or even greater than 2.3.

The composite membrane can be used for separating virus particles from a liquid by filtration of the liquid through the membrane. In one embodiment of the invention, the filtration is normal-flow filtration (NFF), which is also called dead-ended or direct flow filtration. In another embodiment of the invention, the filtration is tangential-flow filtration (TFF).

Thus, a further aspect of the present invention is a device for removing virus particles from liquids, i.e. a virus filter comprising the composite membrane produced by the process of the invention.

The composite membrane used in the device can take the form of a sheet or a plurality of sheets, e.g. a stack of planar membranes. Alternatively, the membrane used in the device can take the form of a hollow fiber or a plurality of hollow fibers, e.g. a bundle of hollow fiber membranes. Suitable sheets and fibers, respectively, their properties and preparation have been described above.

In one embodiment of the device, the membrane forms an interface between two fluid compartments of the device.

An exemplary device comprises two compartments separated by a semipermeable membrane mounted in a casing, a first internal compartment fitted with two accesses and a second external compartment comprising one or two accesses, both compartments being also separated by a potting compound, based on an appropriate adhesive compound, intended for forming as applicable (i) a cylindrical partition separating both compartments of said device containing a semipermeable membrane of the hollow fiber bundle type as defined above or (ii) a tight seal in said device including a semipermeable membrane of the sheet membrane type as defined above.

Another exemplary device comprises a plurality of hollow fiber membranes, contained within an outer shell, and configured so that fluid within a space external to the hollow fibers (i.e., an extracapillary compartment) is segregated from fluid passing through the hollow fibers and their corresponding orifices. Additionally, the device includes two manifold end chambers within the outer shell on opposite ends of the device. Each of the two orifices of the lumen of a hollow fiber connects to a different end chamber. The end chambers and the extracapillary compartment are separated by the semipermeable membranes of the hollow fibers.

The membrane, the method, and the device of the invention can advantageously be used many processes in the biopharmaceutical industry which require removal of virus particles from a liquid.

## Examples

## Methods

Preparation of mini-modules

Mini-modules [= fiber bundles in a housing] are prepared by putting the fiber bundle in the mini-module housing and cutting them to a defined length of 20 cm. Then, the ends of the fibers are closed with a melting device. Then, the ends of the fiber bundle are potted with polyurethane. Subsequently, the ends of the fibers are cut open. The mini-modules ensure protection of the fibers.

The number of fibers required is calculated for an effective surface A of 10 cm$^2$ according to equation (1)

$$A = \pi \times d_i \times l \times n \ [cm^2] \qquad\qquad (1)$$

with

$d_i$ = inner diameter of fiber [cm]
n = amount of fibers
l = effective fiber length [cm]

Hydraulic Permeability (Lp) of mini-modules

The hydraulic permeability of a membrane bundle is determined by pressing an exact defined volume of water under pressure through the membrane bundle, which has been sealed on one side, and measuring the required time. The hydraulic permeability can be calculated from the determined time, the effective membrane surface area, the applied pressure and the volume of water pressed through the membrane. From the number of fibers, the fiber length as well as the inner diameter of the fiber, the effective membrane surface area is calculated. The membrane bundle has to be wetted thirty minutes before the Lp-test is performed. For this purpose, the membrane bundle is put in a box containing 500 ml of ultrapure water. After 30 minutes, the membrane bundle is transferred into the testing system. The testing system consists of a water bath that is maintained at 37 °C and a device where the membrane bundle can be implemented mechanically. The filling height of the water bath has to ensure that the membrane bundle is located underneath the water surface in the designated device. To avoid that a leakage of the membrane leads to a wrong test result, an integrity test of the membrane bundle and the test system has to be carried out in advance. The integrity test is performed by pressing air through the membrane bundle that is closed on one side of the bundle. Air bubbles indicate a leakage of the membrane bundle or the test device. It has to be checked if the leakage can be associated with the wrong implementation of the membrane bundle in the test device or if a real membrane leakage is present. The membrane bundle has to be discarded if a leakage of the membrane is detected. The applied pressure of the integrity test has to be at least the same value as the applied pressure during the determination of the hydraulic permeability in order to ensure, that no leakage can occur during the measurement of the hydraulic permeability because of a too high applied pressure.

Sieving coefficient of IgG in aqueous solution

The sieving coefficient of IgG is determined by dead-end filtration of a solution of 2.5 g/l IgG in PBS buffer.

- The module is first washed with distilled water (10 ml at a flow rate of 0.04 to 1.5 ml/min).

- Then 100 ml of the IgG solution are filtered through the module at a flow rate of 0.7 ml/min.

- A sample of the ultrafiltrate is collected every 15 minutes and analyzed for IgG content using the UF-EW method.

- Overall filtration time is 2.5 hours.

Gold particle retention (GPR)

The module is flushed with distilled water and a volume of 30 mL distilled water is used. With the first 10 mL the blood side is flushed (flow adjusted for a pressure of 0.2-0.3 bar) and with the other 20 mL the filtrate side (dead-end filtration) is flushed. A flow is used that result in a pressure of 0.98 bar during the dead-end filtration procedure.

A solution comprising gold particles having a diameter of approximately 20 nm (Plano) is diluted as follows: 100 mL of Plano solution is mixed with 203 mg of Polyoxyethylene β-naphtylether and 1227 mg of Poly(sodium 4-styrene-sulfonate homogeneously. The solution then is put in an ultrasonic bath for 15 minutes. This solution is pumped through the mini-module at a flow rate of 0.35 ml/min.

The particle content in the feed and the filtrate is determined photometrically by measuring extinction at 530 nm, e.g. using a Ultrospec™ 3000 pro photometer.

The GPR value is calculated according to equation (4)

$$ GPR = \log_{10}\left(\frac{A}{F}\right) \tag{4} $$

with

A being the extinction of the feed solution;
F being the extinction of the filtrate;

**Example 1**

Preparation of the porous membrane:

A polymer solution was prepared by dissolving 25.0 wt-% polyethersulfone (PES; BASF Ultrason 6020), 3.0 wt-% high molecular weight polyvinylpyrrolidone (PVP; BASF K85) in 72 wt-% N-Methylpyrrolidone (NMP). The viscosity of the polymer solution at room temperature was 116,800 mPa x s.

The term "viscosity" in respect of the polymer solution of the present invention means the dynamic viscosity, if not otherwise indicated. To measure the viscosity of the polymer solution, a commercial Rheometer from Anton Paar GmbH (MCR 101) was used. The polymer solution is placed between two temperature-controlled plates. The measurement is performed at 22 °C. All other measurement conditions are according to the manufacturer's instructions.

To prepare the solution, NMP was placed in a three neck-flask with finger-paddle agitator in the centre neck. Then, the PVP was added to the NMP and stirred at 50 °C until a homogeneous clear solution was formed. Finally, the polyethersulfone (PES) was added. The mixture was stirred at 50 °C until a clear high viscous solution was obtained. The warm solution was cooled down to 20 °C and degassed. To fully degas the solution, the highly viscous polymer solution was transferred into a stainless steel container, the container was closed tightly and vacuum was applied to the container. The solution was degassed at 50 mmHg for 6 hours. During this degassing procedure, the container was moved to create a larger surface and thinner film thickness of the polymer solution in the container to improve the degassing procedure.

To form a membrane, the polymer solution was kept at room temperature and passed through a spinning die into a precipitation bath As centre fluid a mixture of 30 wt% water and 70 wt% NMP was used. The temperature of the die was 25 °C. The hollow fiber membrane was formed at a spinning speed of 6 m/min. The liquid capillary leaving the die was passed into a precipitation bath consisting of 67 wt% NMP and 33 wt% water and having a temperature of 9 °C. The distance between the exit of the die and the precipitation bath was 1.5 cm. The formed hollow fiber membrane was guided through 5 different water baths having a temperature of 65 °C.

The resulting hollow fiber membrane had an inner diameter of 341 μm, an outer diameter of 423 μm and a sponge like structure.

After the winding of the fibers, they were rinsed to remove excessive solvent from the fibers. After the rinsing, the hollow fibers were dried with hot air flowing through the fiber bundle. Mini-modules comprising 7 fibers (corresponding to a membrane surface of about 10 cm$^2$) were prepared as described above, having a Lp of 11.1·10$^{-4}$ cm$^3$/(cm$^2$·bar·sec).

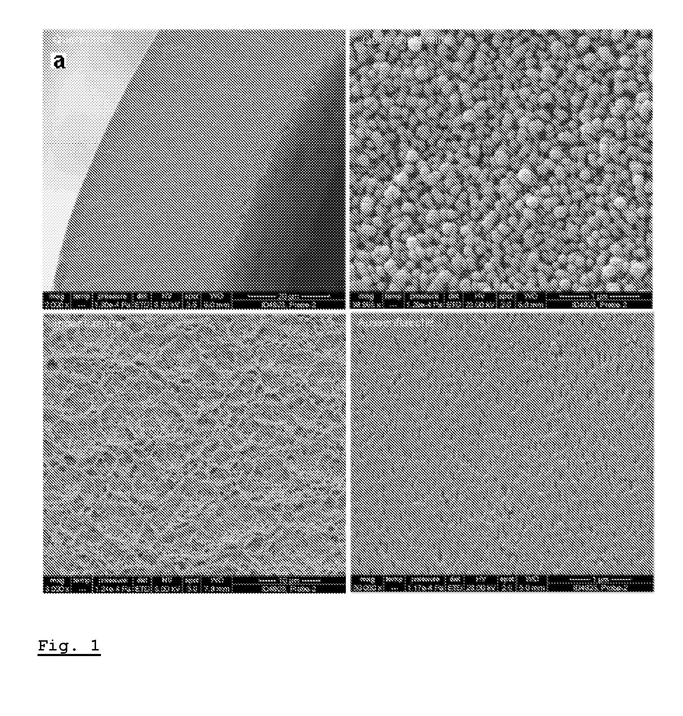

SEM pictures of the membrane are shown in Fig. 1. Results of the measurement of the sieving coefficient (SC) for IgG are shown in Table 1.

**Example 2**

An 8 wt.-% solution of poly(vinyl alcohol-co-ethylene) comprising 27 mol% ethylene, having a melt index of 3.9 g/10 min (210 °C) and a Tg of 72 °C (Sigma-Aldrich, Prod. No. 414077) in 1-ethyl-3-methylimidazolium acetate (Basionic® BC 01, BASF SE) was prepared. The solution had a viscosity of η = 8,200 mPa x s (22°C).

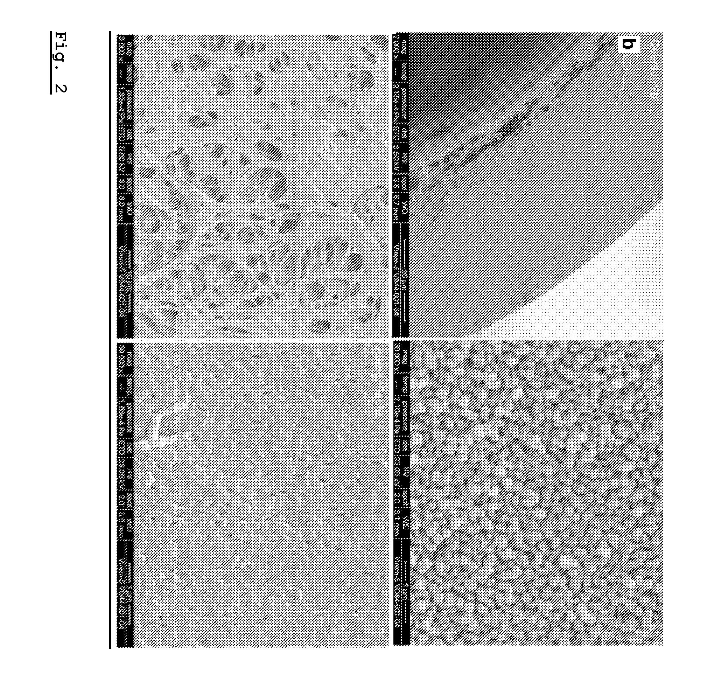

The fibers of a mini module were filled with the solution by sucking the solution via a pressure gradient into the cross-section of the hollow fibers. Residual polymer solution was purged from the fibers by sparging with compressed air. A precipitation liquid comprising 50 wt% water and 50 wt% 1-ethyl-3-methylimidazolium acetate was injected into the mini-module on both sides of the fiber. After 30 minutes at room temperature, the precipitation liquid was removed and the fibers were washed with de-ionized water. The module had a Lp of $18.7 \cdot 10^{-4}$ $cm^3/(cm^2 \cdot bar \cdot sec)$. SEM pictures of the membrane are shown in Fig. 2. Results of the measurement of the sieving coefficient (SC) for IgG are shown in Table 1. In comparison with the module of Example 1, the module comprising the composite fiber showed drastically lower IgG fouling.

**Table 1**

| Example | | Time [min] | | | | | | | |
|---|---|---|---|---|---|---|---|---|---|
| | | 15' | 30' | 45' | 60' | 75' | 90' | 105' | 120' |
| 1 | Pressure [mmHg] | 1455 | 2135 | 3041 | End of the test | | | | |
| | SC [%] | 94 | 96 | 96 | | | | | |
| 2 | Pressure [mmHg] | 525 | 652 | 780 | 930 | 1125 | 1327 | 1500 | 1687 |
| | SC [%] | 100 | 100 | 100 | 100 | 100 | 100 | 100 | 91 |

**Example 3**

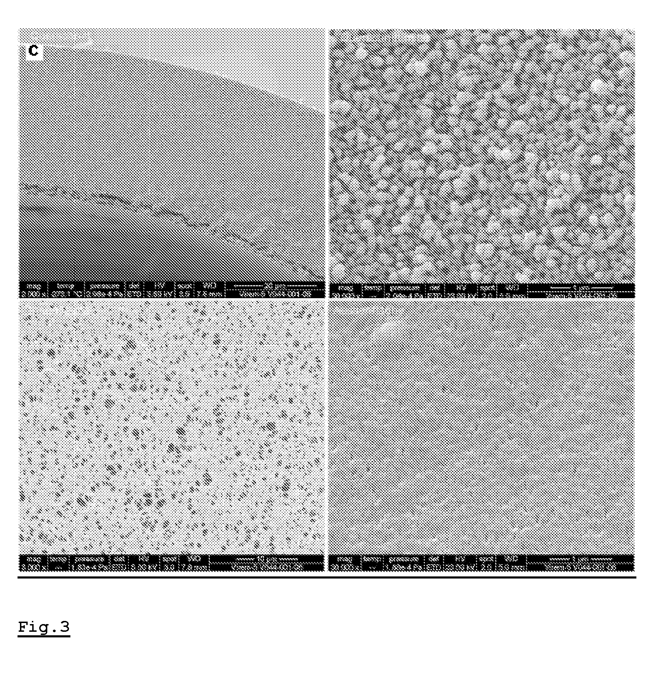

Example 2 was repeated using a precipitation liquid comprising 40 wt% water and 60 wt% 1-ethyl-3-methylimidazolium acetate. The module had a Lp of $15.3.10^{-4}$ $cm^3/(cm^2 \cdot bar \cdot sec)$. SEM pictures of the membrane are shown in Fig. 3.

**Claims**

1.   A process for preparing a composite porous membrane, comprising modifying a porous membrane comprised of synthetic polymers selected from the group consisting of polysulfones (PSf); polyethersulfones (PES); polyvinylidene fluorides (PVDF); polyacrylonitriles (PAN); and blends of the individual polymers with polyvinylpyrrolidones with a membrane-forming hydrophilic polymer selected from the group consisting of cellulose, cellulose derivatives, and poly(vinyl alcohol-co-ethylene).

2.   The process of claim 1, wherein the pore space of the porous membrane is modified with the hydrophilic polymer.

3.   The process of claim 1 or 2, wherein one or both surfaces of the porous membrane are modified with the hydrophilic polymer.

4.   The process of any one of claims 1 to 3, wherein the modification of the porous membrane is effected by precipitating the hydrophilic polymer from solution in the presence of the porous membrane.

5.   The process of claim 4, wherein the solution of the hydrophilic polymer comprises an ionic liquid.

6.   The process of claim 5, wherein the ionic liquid comprises cations selected from the group consisting of methyl-tri-n-butylammonium, methylimidazolium, 1-ethyl-3-methylimidazolium, 1-butyl-3-methylimidazolium, 1-ethyl-2,3-dimethylimidazolium, 1,2,3-trimethylimidazolium, and 1,2,4-trimethylpyrazolium, and anions selected from the group consisting of acetate, ethylsulfate, methylsulfate, thiocyanate, hydrogen sulfate, tetrachloroaluminate, and chloride.

7.   The process of claim 6, wherein the ionic liquid comprises 1-ethyl-3-methylimidazolium acetate.

8.   The process of any one of claims 4 to 7, wherein the solution of the hydrophilic polymer is provided on one side of the porous membrane, and a precipitation liquid is provided on the other side of the porous membrane.

9.   The process of any one of claims 4 to 7, wherein the pore space of the porous membrane is filled with the solution of the hydrophilic polymer and the porous membrane is subsequently contacted with a precipitation liquid from one side or from both sides.

**10.** The process of any one of claims 1 to 9, wherein the porous membrane is a hollow fiber membrane.

**11.** The process of any one of claims 1 to 9, wherein the porous membrane is a flat sheet membrane.

**12.** The process of any one of claims 1 to 11, wherein the porous membrane has a GPR of greater than 1.4.

**13.** A virus filter comprising a composite membrane prepared by the process of any one of claims 1 to 12.

**14.** Use of the composite membrane prepared by the process of any one of claims 1 to 12 for removing virus particles from a liquid by filtration of the liquid through the membrane.

**15.** Use according to claim 14, wherein the filtration is tangential-flow filtration (TFF).

Fig. 1

Fig. 2

Fig.3

Europäisches
Patentamt

European
Patent Office

Office européen
des brevets

# EUROPEAN SEARCH REPORT

Application Number

EP 11 17 4236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 775 016 A1 (MILLIPORE CORP [US]) 18 April 2007 (2007-04-18) * abstract * * paragraphs [0007], [0009], [0017], [0019] - [0021], [0023], [0024] - [0026], [0033], [0036] * ----- | 1-15 | INV. B01D69/12 B01D71/34 B01D71/42 B01D71/68 B01D67/00 |
| X | EP 0 665 049 A1 (MITSUBISHI RAYON CO [JP]) 2 August 1995 (1995-08-02) * abstract * * page 10, line 41 - page 11, line 6 * ----- | 1-12 | |
| A,D | US 5 084 173 A (NITADORI YOSHIAKI [JP] ET AL) 28 January 1992 (1992-01-28) * the whole document * ----- | 1-15 | |
| A | EP 2 199 319 A1 (GAMBRO LUNDIA AB [SE]) 23 June 2010 (2010-06-23) * the whole document * ----- | 5-7 | |

TECHNICAL FIELDS
SEARCHED     (IPC)

B01D

The present search report has been drawn up for all claims

| Place of search | Date of completion of the search | Examiner |
|---|---|---|
| Munich | 17 January 2012 | Lançon, Eveline |

EPO FORM 1503 03.82 (P04C01)

## ANNEX TO THE EUROPEAN SEARCH REPORT
## ON EUROPEAN PATENT APPLICATION NO.

EP 11 17 4236

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2012

| Patent document cited in search report | | Publication date | Patent family member(s) | | Publication date |
|---|---|---|---|---|---|
| EP 1775016 | A1 | 18-04-2007 | CN | 101690870 A | 07-04-2010 |
| | | | EP | 1775016 A1 | 18-04-2007 |
| | | | JP | 4504963 B2 | 14-07-2010 |
| | | | JP | 2007136449 A | 07-06-2007 |
| | | | SG | 131871 A1 | 28-05-2007 |
| EP 0665049 | A1 | 02-08-1995 | DE | 69501337 D1 | 12-02-1998 |
| | | | DE | 69501337 T2 | 28-05-1998 |
| | | | EP | 0665049 A1 | 02-08-1995 |
| | | | US | 5746916 A | 05-05-1998 |
| US 5084173 | A | 28-01-1992 | NONE | | |
| EP 2199319 | A1 | 23-06-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5084173 A
- WO 2003029329 A2
- DE 102005062608 A1